# EUROPEAN PATENT SPECIFICATION

(11) **EP 2 326 044 B1**
(45) Date of publication and mention of the grant of the patent: **26.12.2012**
(21) Application number: 09014487.4
(22) Date of filing: 20.11.2009
(51) Int. Cl.: H04L 12/24, H04L 12/26

(54) **Measurement arrangement and method for performing quality of service measurements of a telecommunication network**
Messanordnung und Verfahren zur Durchführung von Messungen der Dienstqualität eines Telekommunikationsnetzwerks
Agencement de mesure et procédé pour la réalisation de mesure de qualité de service d'un réseau de télécommunications

(43) Date of publication of application: 25.05.2011
(73) Proprietor: SwissQual License AG, 4528 Zuchwil (CH)
(72) Inventor: Juric, Pero, 4513 Langendorf (CH); Bobst, Hanspeter, 4702 Oensingen (CH)
(74) Representative: Fischer, Britta Ruth

(56) References cited:
- WO-A1-2005/048629
- US-A1- 2005 089 043
- Ookla: "Ookla Net Metrics - Speed test documentation - Speed test usage" 4 June 2008 (2008-06-04), pages 1-2, XP002580763 Retrieved from the Internet: URL:http://web.archive.org/web/20080604083 354/speedtest.ookla.com/docs/usage.html> [retrieved on 2010-04-30]
- DIAZ A ET AL: "QoS analysis of video streaming service in live cellular networks" COMPUTER COMMUNICATIONS, ELSEVIER SCIENCE PUBLISHERS BV, AMSTERDAM, NL, vol. 33, no. 3, 2 October 2009 (2009-10-02), pages 322-335, XP026858226 ISSN: 0140-3664 [retrieved on 2009-10-02]

## Description

The invention relates to a measurement arrangement and a method for performing quality of service measurements of a telecommunication network, in particular a mobile network. Data, in particular multimedia data such as voice and video messages, internet, video data and audio data, can be transferred via the telecommunication network to an end-user (also called subscriber), which may also be a so-called set-top box, who connects to the telecommunication network via an end device such as a cellular phone, a laptop computer, a desktop computer, a netbook, a personal digital assistant (PDA) or similar.

Providers of telecommunication network services need to monitor the performance and the quality of the provided services and, hence, of the telecommunication network at the end device of the end-user, i.e. at the very end point of the communication channel, in order to properly detect and solve service quality issues before problems impact the end-users and in order to assess end-user acceptability.

Basic measures for assessing the quality of a network such as throughput measurements do not depend on end-user perception. However, only the end-user is competent to make statements about the quality of a telecommunication network and the network services provided as it is subjectively perceived and experienced by him. As the quality of a telecommunication network and the services provided are assessed by end-users, it can only be a subjective quantity. The quality statements will vary from end-user to end-user e.g. due to differences in perceptual acuity and preference. If there is a sufficiently high number of end-user quality statements available, then this number of end-user quality statements can be accordingly evaluated, in particularly by statistical methods, to give results that are of relevance to the network provider. The result of an evaluation of a sufficiently high number of end-user quality statements is also called Quality of Experience (QoE), which is defined as the overall acceptability of a service or application as perceived subjectively by the end-users. Overall acceptability may be influenced by user expectations and context. Quality of Experience includes the complete end-to-end system effects taking into account client, terminal, end devices, network, service infrastructure with servers etc. The determination of the Quality of Experience is usually based on the determination of appropriate Quality of Service (QoS) parameters and can often be estimated using objective models.

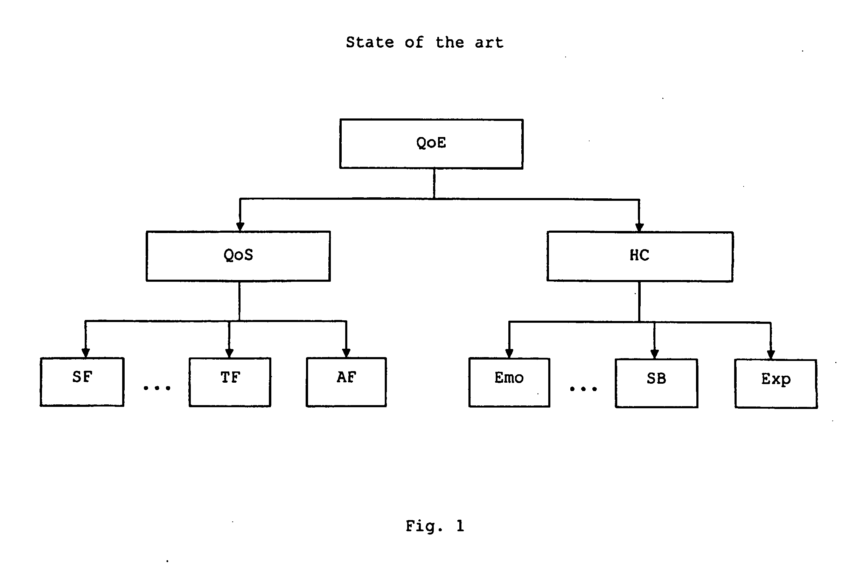

Figure 1 schematically depicts the determination of the Quality of Experience QoE from Quality of Service QoS parameters and from human components HC as known from the Recommendation ITU-T G.1080 of the Telecommunication Standardization Sector (ITU-T). The Quality of Service QoS is based on several factors such as service factors SF, transport factors TF and application factors AF that can be determined objectively through measurements and that have an impact on the Quality of Experience QoE. In particular, these several factors include e.g. the encoding bit rate, packet loss, network delay, service availability etc. The human components HC that have an impact on the Quality of Experience QoE comprise, among others, emotions/emotional components Emo, service billing SB (i.e. costs for the end-user) and end-user experience Exp.

Mechanisms for providing Quality of Service QoS can be implemented at different levels. E.g. at the telecommunication network level providing appropriate Quality of Service includes the provision of traffic management mechanisms such as buffering and scheduling that are employed to differentiate between data traffic attributed to different applications. The human components are typically combined in a so-called MOS (mean opinion score) that is defined as a numerical measure of the perceived network/service quality, the numerical measure being generated by averaging the results of a set of standard subjective tests where a number of end-users rates the quality of test services run on the telecommunication network being tested. The MOS-components of the QoE and the QoS-components are usually correlated. The relation between the QoE and the QoS-components is typically estimated empirically. MOS calculations (such as Video MOS or Voice MOS) are primarily used for streaming tests.

As subjective tests, wherein the end-users rate the quality of a number of test services, are typically rather expensive, such subjective tests are today almost exclusively substituted by objective, instrumental methods that are repetitive in that they give the same result for the same service quality. The results of these methods have been shown to be sufficiently correlated with the results of the subjective tests. These objective, instrumental methods and their corresponding measurement arrangements can be employed independently of the time of the day, geographic position and cultural characteristics of a region. The instrumental methods are usually implemented as computer programs and can be employed as Quality of Service measurement tools in various ways.

Today several approaches exist for measuring the service quality of mobile networks. In the today most commonly used approach a measurement arrangement is placed inside a vehicle which is driven around, i.e. at least one measurement arrangement, one vehicle and one driver are required. The measurement arrangement performs certain test scenarios as e.g. speech or video test calls in order to assess the quality of the content or downloading of files in order to test the throughput performance of the data communication channel. This approach is also called attended drive test. It is expensive due to vehicle and driver costs. Furthermore, area coverage is limited and depends on the number of vehicles. One measurement vehicle can typically cover about 1 Million end-users.

In a known different approach, the unattended drive test, stand-alone and remote-controlled measurement arrangements in the form of measurement boxes are placed in public means of transportation such as taxis, busses or trains. The measurement arrangements are monitored and controlled by a central control station. The measurement arrangement can also be given by an industry-standard smart phone on which in particular the application "QualiPoc" is installed that is provided by SwissQual and that supports service quality testing and provides instant feedback on key performance indicators for network and service quality. Smart phones with the "QualiPoc" application can also be used on motorbikes as often used by courier services in cities with heavy traffic and on narrow roads. Compared with the attended drive test, the network provider saves the costs for the vehicle and the driver with the unattended drive test. The achievable area coverage is larger as more measurement arrangements than with the attended drive test can be employed for the same price. However, costs are still rather high due to the high requirements on reliability and number of required measurement arrangements.

In a further known approach called passive monitoring a small measuring application is installed on an end device (also called end terminal) such as a mobile phone, a landline phone, a computer or a set-top box for receiving digital TV of an end-user. The application typically runs in the background and records simple measurement results. While this approach is cost-effective, it is not easily realized as it offers only limited possibilities for testing (due to the passiveness). Also, most end-users do not appreciate to be monitored but want their privacy to be preserved. The limited possibilities for testing are mainly due to limited hardware resources of the end device and due to the fact that the application has to be as imperceptible as possible for the end-user (the application "QualiPoc" by SwissQual can operate in a user-friendly mode for installation on an end-user smart phone). For example, to measure data throughput of a telecommunication network, measurements of certain file sizes are required that have to be transferred according to a specific protocol such as FTP (File Transfer Protocol), UDP (User Datagram Protocol, also called Universal Datagram Protocol), or HTTP (Hypertext Transfer Protocol). Throughput is typically computed by dividing the size of a transferred file by the time needed to transfer it. Ordinary internet browsing usually has to be tested too, but is on its own usually not sufficient for drawing relevant conclusions regarding network and service quality. Passive monitoring approaches are, for example, provided by the products "Experience Manager", "Device Analyser" and "Service Analyser" of Carrier IQ (confer http://www.carrieriq.com) and by P3 solutions (confer http://www.p3-group.com/communications/en/products/insight_devicebased_ quality_solution.html).

The ideal approach for testing network and service quality employs a measuring application (short: application) that can be installed on all possible end-user end devices/terminals such as mobiles phones, landline phones, IP phones (confer http://en.wikipedia.org/wiki/IP_Phone), computers, set-top boxes and similar. With this application the end-users should then periodically perform certain tests (i.e. active tests) and transfer the test results to the network provider. Active testing makes use of a dedicated channel for the measurements e.g. by dialling a number and making a call i.e. by setting-up a channel for the measurement. The biggest problem with this approach is, however, to motivate the end-user to perform the tests as each test will eventually cost his time and money. While it is in principle possible to compensate for the test performing, e.g. by listing the associated costs on the monthly bill and making a corresponding refund, such an integration of the costs for test performing into the billing system might be quite complicated, time consuming, different for each network provider and, hence, rather inflexible. Furthermore, if an operator wants to test competing networks in parallel in a so-called benchmarking test scenario, it gets usually rather complicated to compensate the end-users from different network operators.

From patent application US 2005/089043 A1 an apparatus and a method for assessing Quality of Experience (QoE) for wireless communication networks are known that can be used in conjunction with media streaming applications. QoE metrics are negotiated between a packet switched streaming service (PSS) client and a PSS server. A QoE server module of the PSS server quantifies the impact of several factors such as network conditions and client characteristics on the communicated media by gathering feedback from the PSS client. The PSS client measures the metrics at the transport layer.

From "Ookla Net Metrics - Speed Test Documentation - Speed Test Usage", pages 1-2 (http://web-archive.org/web/20080604083354/speedtest.ookl a.com/docs/usage.html, XP002580763) a speed test for testing internet speed is known. A web link to Adobe Flash is provided. A download test may be performed by downloading a binary file from a web server to a Flash client. Throughput is measured. The test results are sent to an Ookla reporting system API.

The article "QoS analysis of video streaming service in live cellular networks" by Diaz, A. et al. in Computer Communications, vol. 33, no. 3, by Elsevier Science, Amsterdam, Netherlands, published on October 2, 2009 (XP026858226) relates to an analysis of video streaming, wherein smart phones are used as measurement devices in a way that enables them to capture customers' experiences.

International patent application WO 2005/048629 A1 discloses an architecture and a method for monitoring Quality of Service in a telecommunication network. A set of terminals with measuring agents is provided. The measuring agents interface with processes for managing application sessions of the network and with processes for measuring the operating conditions of the network. A sub-system for managing the collection of measurement data is provided.

It is an object of the invention to provide a measurement arrangement and a method for performing quality of service measurements of a telecommunication network, by which active testing of a telecommunication network can easily and cost-effectively be performed by its end-users. It is a further object of the invention to provide a measurement arrangement and a method for performing quality of service measurements of a telecommunication network, by which its end-users are motivated to perform tasks that represent active tests for testing the service quality of the telecommunication network in question.

In order to implement these and still further objects of the invention, which will become more readily apparent as the description proceeds, a measurement arrangement for performing quality of service measurements of a telecommunication network is provided, the measurement arrangement comprising an application, a content server with data, in particular multimedia data, the data being provided by a public data server for a fee, and an evaluation server for evaluating measurement results to determine the quality of the telecommunication network. The application is designed such that an end-user can log in to the content server by means of the application, that the application performs measurements during download and/or streaming of the data from the content server and that the application uploads the measurement results to the evaluation server. The content server is preferably designed and/or configured such that the data can be downloaded and/or streamed from it free of charge by means of the application.

The method for performing quality of service measurements of a telecommunication network according to the invention comprises the steps of proving an end-user, who has an end device, with an application for logging in to the content server from which data, in particular multimedia data, can be downloaded and/or streamed, performing quality of service measurements by means of the application during download and/or streaming of the data from the content server, and uploading the thus obtained measurement results by means of the application to the evaluation server for evaluation of the measurement results in order to determine the quality of the telecommunication network. As mentioned above, the data on the content server have been purchased from a public data server.

The data on the content server (also called "content") are, for example, audio files, video files, e-books, TV-programs, digital images, webcam data, EPGs (electronic program guides), teletext etc. The content server can, for example, be an internet portal/web portal, a video streaming server, a TV server and/or any other server from which such kind of data/content can be downloaded and/or streamed, for which an end-user would normally be ready to pay (such as music files, video files, information or similar). At this, downloading comprises downloading on demand and streaming comprises either broadcasting of TV or VoD (Video on Demand). With streaming the actual data remains on the content server, i.e. no copy of the data is obtained on the end device as being the case with downloading. If the content server is e.g. configured as TV server then certain TV programs may, for example, be broadcasted by it for free during certain time slots of a day, wherein the operator of the measurement arrangement has in turn purchased the TV programs that run during these time slots from a public TV server.

The end-user is preferably provided with the application free of charge. The application is preferentially realized by a software program that the end-user can download for free in particular from the web, for example from the Ovi Store by Nokia or the App Store by Apple Inc., and install on his end device. If the end device has not enough memory and/or processing power for installing and/or running of the application, the application is preferably split such that part of the application remains and runs on the content server and that the remaining part of the application is installed on the end device of the end-user. For example, the quality of video and/or audio streaming is usually tested by using so-called objective models with which subjective quality opinions of end-users can be predicted. These objective models form then part of the application and may require a lot of processor and/or memory resources. In such a case, the objective models are preferably split into two parts, with one part running on the end device as part of the application and the second part running on the content servers (as non-downloadable part of the application). The first part then extracts e.g. the signal features from captured streams which are needed for further processing on the content server acting as evaluation server. The same set of signal features is in this case extracted from the source signal (i.e. the original content) already being on the content server.

With the application the end-user can log in to the content server and stream data of his interest and/or download data of his interest onto his end device such as his mobile phone, his netbook etc. The application installed on his end device performs measurements that are related to the quality of service of the telecommunication network the end-user has subscribed to during use of the data/content, i.e. during download or streaming. The application then uploads the results of these measurements to the evaluation server for evaluation with respect to the quality of service. Preferably, the evaluation server is given by or forms part of the content server so that less components are required.

Hence, the end-user is compensated with free but legally obtained data/content of his interest for his end device being used to perform quality of service measurements and for making the measurement results available to the operator of the measurement arrangement, who then can either use the measurement results himself e.g. for network optimization or sell the measurement results to a service provider such as a phone company. The compensation with free data/content provides an incentive for the end-user to participate in the taking of quality of service measurements by means of his end device. The operator of the measurement arrangement himself pays the required fees for the data on the content server to the public data server, from which the data has been obtained. The payment for the data can be done automatically (e.g. by the public data server provider having given access to the operator's credit card) and/or regularly, for example, monthly. The operator of the measurement arrangement can e.g. buy each song of the top ten of the charts a thousand times so that it can be downloaded or streamed a thousand times from the content server.

Preferably, the end-user is informed by the application and/or the content server that the data on the content server is free to download and/or stream only under the condition that he agrees to the performing of measurements during his downloading/streaming activities in addition to the uploading of the measurement results to the evaluation server before the end-user actually starts downloading or streaming data from the content server.

As the operator of the measurement arrangement basically determines what data shall be put onto the content server, he has full control about the data on which quality of service measurements are based. This is an advantage over passive testing. The data on the content server are preferentially changed in periodic intervals, e.g. each day, in order to motivate the end-user to often - maybe even periodically - log in to the content server and download/stream new data so that more measurements can be performed. For example, each day there can be provided on the content server the "downloads of the day" or "video clips of the day", respectively, that are only available for one day. The end-user can be informed about this by a dedicated or broadcast notification in form of an MMS (Multimedia Messaging Service), an SMS (Short Message Service), an Email or similar sent in particular by the content server to the end device of the end-user. The notification can for example be "There is new content publicly available for download." or similar. If several end-users regularly log in to the content server to look for interesting data and download/stream such interesting data, then large amounts of measurements results can be generated and evaluated.

By varying the attractiveness of the data on the content server for the end-users, the number of performed measurements can be further controlled. I.e. if the data on the content server is attractive for end-users, more downloads/streaming of the data will take place and thus more measurements can be performed by the application. If on the other hand the data on the content server is less attractive for the end-users, then fewer downloads/streaming will take place and less measurements can be performed. If, for example, a modification of the telecommunication network in question has just been completed, it may be desirable to perform more measurements, i.e. data of high attractiveness should be provided by the content server. Data of high attractiveness may, for example, be the top ten hits of the music charts, the top ten video clips, current information such as the daily news, or similar. Regional controlling of the number of performed measurements can be achieved by having corresponding regionally interesting data such as music hits of local artists on the content server.

Downloading of data from the content server leads to a one-to-one copy of the data on the end device of the end-user. Downloading of data may be performed in accordance with FTP or HTTP and is thereby safeguarded against data loss. During the download of data from the content server to an end device of an end-user measurements are performed that preferably comprise the measuring of parameters such as throughput (in particular intermediate as well as average throughput), downloading time, IP (internet protocol) trace data, RF (radio frequency) trace data, GPS (Global Positioning System) position of the end device, the operating system employed by the end device, the type of end device (also called end-user terminal), the version of the software installed on the end device, the operator identifier (ID), a list of applications running in parallel etc. The measured parameters are preferentially gathered and stored in a data file as measurement results and uploaded to the evaluation server by the application. The uploading of the measurement results takes preferably place before the download of the data from the content server has ended, i.e. before the application registers that download has been completed. The evaluation server, which is preferably given by the content server, can compare the measurement results with the original data that is on the content server.

During the upload of the measurement results further quality of service measurements are performed by the application e.g. throughput tests in uplink (UP-link) direction, the results of these further measurements being subsequently also uploaded to the evaluation server by the application, with the application being designed accordingly.

Streaming of data from the content server may be performed in accordance with UDP or RTSP/RTP (Real Time Streaming Protocol/Real-time Transport Protocol) which provides only for non-safeguarded data transfer, i.e. transmission errors can occur. During the streaming of data that is provided by the content server the received data (e.g. a video stream) is measured and a copy of the streamed data is preferentially recorded by the application on the end device and after completion of the streaming uploaded to the evaluation server. Instead of a copy of the streamed data also a reduced set of signal features of the streamed data can be recorded by the application and after completion uploaded to the evaluation server, the reason being limited bandwidth in the UP-link direction which is mostly asymmetric in comparison to the downlink. The evaluation server can thus compare the copy of the received streamed data with the original data stream on the content server in order to detect transmission errors which give an indication of the network quality. The evaluation server is preferably given by the content server. In addition, at least some of the parameters mentioned in the penultimate paragraph for the downloading of data can be measured during the streaming and uploaded by the application to the evaluation server.

The streamed data is preferably compressed, e.g. to one hundredth of its original size, by the application during streaming as the uplink from the end device to the evaluation/content server often has a smaller bandwidth than the downlink from the content server to the end device (asymmetric link capacities). The application is designed accordingly. The compressed copy of the streamed data provides reference data for comparison with the original data stream. A full-reference model is thereby emulated.

If the streamed data is copied by the application this corresponds to lossless compression allowing for the exact original data to be reconstructed from the compressed/copied data. For lossless compression ZIP, LZW (Lempel-Ziv-Welch) or Huffman coding algorithms may be used. If the streamed data is lossily compressed, i.e. if a data loss occurs during compression, then an approximation of the original data can be obtained during reconstruction from the compressed data. Lossy compression can in particular be employed if the only purpose of the performing of the quality of service measurements is to evaluate quality metrics so that there is no need to play back the content/data on the evaluation server. An example for lossy compression is an extraction of signal features of the streamed data which are relevant for the estimation of the quality of the content/data when compared with the original set of reference signal/reference signal features.

During the upload of the compressed copy of the streamed data and of the measurement results further quality of service measurements are preferentially performed by the application, the results of these further measurements being subsequently also uploaded to the evaluation server by the application, with the application being designed accordingly.

Further advantageous features and applications of the invention can be found in the dependent claims as well as in the following description of the drawings illustrating the invention. In the drawings like reference signs designate the same or similar parts throughout the several figures of which:
Fig. 1 schematically shows the derivation of Quality of Experience,
Fig. 2 schematically shows a measurement arrangement according to the invention, and
Fig. 3 shows a flowchart of the method of the invention.

Figure 1 has been described in the introductory-part of the description and reference is made thereto.

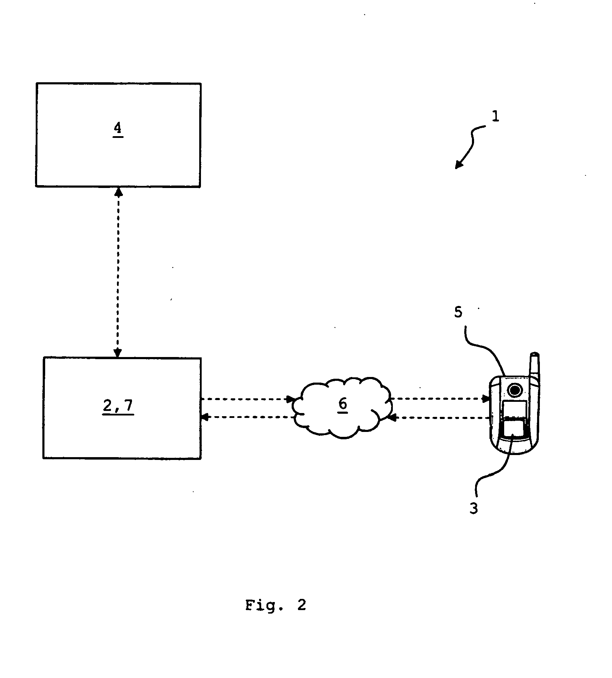

Figure 2 shows a measurement arrangement 1 according to the invention. The measurement arrangement 1 comprises a content server 2 and an application 3, which in particular has the form of a software program. With the application 3 data can be downloaded and/or streamed free of charge from the content server 2. The content server 2 has been provided with data by a public data server 4 for a fee, i.e. the data of the content server 2 has been purchased from the public data server 4.

The application 3 is offered free of charge to the end-user, for example, by the content server 2 and/or an accessible webpage for installation on his end device 5 such as e.g. a mobile phone (as depicted in Figure 1) or a netbook, i.e. the end-user can download the application 3 free of charge. If computing power and/or memory of the end device 5 do not suffice for installation of the entire application 3 on the end device 5, then preferably only a necessary part of the application 3 is installed on the end device 5 with the remaining part of the application 3 being executably installed on the content server 2.

With the application 3 the end-user can log in to the content server 2 with his end device 5 and download and/or stream data provided by the content server 2 via the telecommunication network 6 of which he is a subscriber. During the downloading and/or streaming of the data the application 3 performs quality of service measurements. The measurement results are then send by the application 3 to the evaluation server 7 that is preferably given by the content server 2, i.e. the content server 2 preferably analyses and evaluates the measurement results in addition to providing the data.

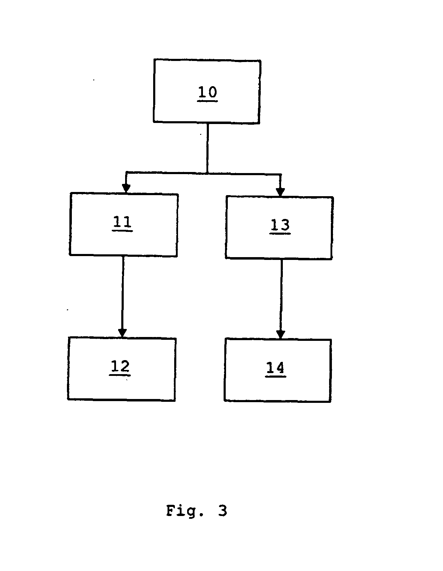

Figure 3 shows a flowchart of the method according to the invention. In a first step 10 an end-user is offered the application 3 that he can download for free, for example, from the content server 2 and/or a webpage and that he can install either completely or - as described above - partly on his end device. After the end-user has downloaded and installed the application 3 on his end device he can log in to the content server 2 by means of this application 3 and download and/or stream data that is provided by the content server 2 for free.

When the end-user has started downloading data from the content server 2, the application 3 performs quality of service measurements of the telecommunication network 6 like measuring throughput and latency in step 11. When the application 3 recognizes that the downloading is completed, it uploads the results of the performed measurements in step 12 to the evaluation server 7 for evaluation of the measurement results. The end-user is preferably informed about the completion of the download by the application. Further measurements are performed by the application 3 during the uploading of the measurement results. The results of these further measurements are subsequently also uploaded to the evaluation server 7 for evaluation.

When the end-user has started the streaming of data provided by the content server 2, the application 3 performs in step 13 also quality of service measurements of the telecommunication network 6 such as measuring throughput and latency. The application 3 additionally generates a copy of the streamed data on the end device 5 and compresses this copy to decrease its size. The application 3 then uploads the measurement results and the compressed copy of the streamed data in step 14 to the evaluation server 7 for evaluation. Further measurements are preferably preformed by the application 3 during the uploading of the measurement results and of the compressed copy of the streamed data. The results of these further measurements are subsequently also uploaded to the evaluation server 7 for evaluation.

## Claims

1. A measurement arrangement for performing quality of service measurements of a telecommunication network, the measurement arrangement comprising
- an application (3),
- a content server (2) with data, in particular multimedia data, the data being acquired from a public data server (4) for a fee, and
- an evaluation server (7) for evaluating measurement results to determine the quality of the telecommunication network (6),
- wherein the application (3) is designed such that the application (3) performs measurements during download and/or streaming of the data from the content server (2) and that the application (3) can upload the measurement results to the evaluation server (7),
**characterized in that** the application (3) is designed such that an end-user can log in to the content server (2) by means of the application (3), wherein the application (3) is further designed such that it performs further measurements during the upload of the measurement results and subsequently uploads the results of the further measurements to the evaluation server (7).

2. The measurement arrangement according to claim 1, wherein the content server (2) is configured such that the data can be downloaded and/or streamed from it free of charge by means of the application (3).

3. The measurement arrangement according to claim 1 or 2, wherein the content server (2) comprises the evaluation server (7).

4. The measurement arrangement according to one of the preceding claims, wherein the application (3) is designed such that it generates a compressed copy of the data that is streamed from the content server (2) and uploads the compressed copy of the streamed data to the evaluation server (7).

5. The measurement arrangement according to claim 4, wherein the application (3) is designed such that it performs further measurements during the upload of the compressed copy of streamed data, and subsequently uploads the results of the further measurements to the evaluation server (7).

6. A method for performing quality of service measurements of a telecommunication network (6) by means of a measurement arrangement (1) according to one of the preceding claims, comprising the following steps:
- offering an end-user an application (3) to download for logging in to a content server (2) from which data, in particular multimedia data, can be downloaded and/or streamed, in particular free of charge, the data of the content server (2) being acquired from a public data server (4),
- performing measurements by means of the application (3) during download and/or streaming of the data from the content server (2), and
- uploading the measurement results by means of the application (3) to an evaluation server (7) for evaluation of the measurement results to determine the quality of the telecommunication network (6),
**characterized in that** further measurements are performed by the application (3) during the upload of the measurement results, and that the results of the further measurements are subsequently uploaded to the evaluation server (7) by means of the application (3).

7. The method according to claim 6, wherein a compressed copy of the data that is streamed from the content server (2) is generated and uploaded to the evaluation server (7) by means of the application (3).

8. The method according to claim 7, wherein further measurements are performed by the application (3) during the upload of the compressed copy of streamed data if applicable, and wherein the results of the further measurements are subsequently uploaded to the evaluation server (7) by means of the application (3).

## Patentansprüche

1. Eine Messanordnung zur Durchführung von Servicequalitätsmessungen eines Telekommunikationsnetzwerks, die Messanordnung umfassend:
- eine Anwendung (3),
- einen Inhaltsserver (2) mit Daten, insbesondere Multimediadaten, wobei die Daten von einem öffentlichen Datenserver (4) gegen eine Gebühr erworben sind, und
- einen Evaluierungsserver (7) zum Auswerten von Messergebnissen, um die Qualität des Telekommunikationsnetzwerks (6) zu bestimmen,
- wobei die Anwendung (3) derart ausgestaltet ist, dass die Anwendung (3) Messungen während des Herunterladens und/oder Streamings der Daten von dem Inhaltsserver (2) durchführt und dass die Anwendung (3) die Messergebnisse auf den Evaluierungsserver (7) hochladen kann,
**dadurch gekennzeichnet, dass** die Anwendung (3) derart ausgestaltet ist, dass ein Endbenutzer sich mittels der Anwendung (3) auf dem Inhaltsserver (2) einloggen kann, wobei die Anwendung (3) weiter derart ausgestaltet ist, dass sie weitere Messungen während des Hochladens der Messergebnisse durchführt und anschliessend die Ergebnisse der weiteren Messungen auf den Evaluierungsserver (7) hochlädt.

2. Die Messanordnung gemäss Anspruch 1, wobei der Inhaltsserver (2) derart konfiguriert ist, dass die Daten mittels der Anwendung (3) unentgeltlich heruntergeladen und/oder gestreamt werden können.

3. Die Messanordnung gemäss Anspruch 1 oder 2, wobei der Inhaltsserver (2) den Evalierungsserver (7) umfasst.

4. Die Messanordnung gemäss einem der vorhergehenden Ansprüche, wobei die Anwendung (3) derart ausgestaltet ist, dass sie eine komprimierte Kopie der Daten, die von dem Inhaltsserver (2) gestreamt werden, erzeugt und die komprimierte Kopie der gestreamten Daten auf den Evaluierungsserver (7) hochlädt.

5. Die Messanordnung gemäss Anspruch 4, wobei die Anwendung (3) derart ausgestaltet ist, dass sie weitere Messungen während des Hochladens der komprimierten Kopie der gestreamten Daten durchführt und anschliessend die Ergebnisse der weiteren Messungen auf den Evaluierungsserver (7) hochlädt.

6. Ein Verfahren zur Durchführung von Servicequalitätsmessungen eines Telekommunikationsnetzwerks (6) mittels einer Messanordnung (1) gemäss einem der vorhergehenden Ansprüche, umfassend die folgenden Schritte:
- Anbieten einer Anwendung (3) an einen Endbenutzer zum Herunterladen, um sich auf einen Inhaltsserver (2) einzuloggen, von welchem Daten, insbesondere Multimediadaten, heruntergeladen und/oder gestreamt werden können, insbesondere unentgeltlich, wobei die Daten des Inhaltsservers (2) von einem öffentlichen Datenserver (4) erworben werden,
- Durchführen von Messungen mittels der Anwendung (3) während des Hochladens und/oder Streamings der Daten von dem Inhaltsserver (2) und
- Hochladen der Messergebnisse mittels der Anwendung (3) auf einen Evaluierungsserver (7) zum Auswerten der Messergebnisse, um die Qualität des Telekommunikationsnetzwerks (6) zu bestimmen,
**dadurch gekennzeichnet, dass** von der Anwendung (3) weitere Messungen während des Hochladens der Messergebnisse durchgeführt werden und dass die Ergebnisse der weiteren Messungen anschliessend mittels der Anwendung (3) auf den Evaluierungsserver (7) hochgeladen werden.

7. Das Verfahren gemäss Anspruch 6, wobei miittels der Anwendung (3) eine komprimierte Kopie der Daten, die von dem Inhaltsserver (2) gestreamt werden, erzeugt und auf den Evaluierungsserver (7) hochgeladen wird.

8. Das Verfahren gemäss Anspruch 7, wobei von der Anwendung (3) gegebenenfalls weitere Messungen während des Hochladens der komprimierten Kopie der gestreamten Daten durchgeführt werden und wobei die Ergebnisse der weiteren Messungen anschliessend mittels der Anwendung (3) auf den Evaluierungsserver (7) hochgeladen werden.

## Revendications

1. Agencement de mesure destiné à effectuer des mesures de qualité de service sur un réseau de télécommunications, l'agencement de mesure comprenant :
- une application (3) ;
- un serveur de contenus (2) comportant des données, en particulier des données multimédias, les données étant acquises auprès d'un serveur public de données (4) contre un droit ; et
- un serveur d'évaluation (7), destiné à évaluer des résultats de mesure afin de déterminer la qualité du réseau de télécommunications (6) ;
- dans lequel l'application (3) est conçue de telle manière que l'application (3) effectue des mesures pendant le téléchargement et/ou la diffusion continue des données à partir du serveur de contenus (2) et que l'application (3) puisse télécharger les résultats des mesures vers le serveur d'évaluation (7) ;
**caractérisé en ce que** l'application (3) est conçue de telle manière qu'un utilisateur puisse ouvrir une session sur le serveur de contenus (2) par l'intermédiaire de l'application (3), dans lequel l'application (3) est en outre conçue de telle manière qu'elle effectue de nouvelles mesures pendant le téléchargement montant des résultats des mesures et qu'elle télécharge ensuite les résultats des nouvelles mesures vers le serveur d'évaluation (7).

2. Agencement de mesure selon la revendication 1, dans lequel le serveur de contenus (2) est configuré de manière à ce que les données puissent être gratuitement téléchargées et/ou diffusées en continu à partir de celui-ci, à l'aide de l'application (3).

3. Agencement de mesure selon la revendication 1 ou 2, dans lequel le serveur de contenus (2) comprend le serveur d'évaluation (7).

4. Agencement de mesure selon l'une des revendications précédentes, dans lequel l'application (3) est conçue de manière à produire un exemplaire comprimé des données qui sont diffusées en continu à partir du serveur de contenus (2) et à télécharger l'exemplaire comprimé des données diffusées en continu vers le serveur d'évaluation (7).

5. Agencement de mesure selon la revendication 4, dans lequel l'application (3) est conçue de manière à effectuer de nouvelles mesures pendant le téléchargement montant de l'exemplaire comprimé des données diffusées en continu, et à télécharger ensuite les résultats des nouvelles mesures vers le serveur d'évaluation (7).

6. Procédé de réalisation de mesures de la qualité de service offerte par un réseau de télécommunications (6), à l'aide d'un agencement de mesure (1) selon l'une des revendications précédentes, comprenant les étapes consistant à :
- offrir à un utilisateur une application (3) à télécharger pour ouvrir une session sur un serveur de contenus (2) à partir duquel des données, en particulier des données multimédias, peuvent être téléchargées et/ou diffusées en continu, en particulier gratuitement, les données du serveur de contenus (2) étant acquises auprès d'un serveur public de données (4) ;
- réaliser des mesures à l'aide de l'application (3) pendant le téléchargement et/ou la diffusion continue des données à partir du serveur de contenus (2) ; et
- télécharger les résultats des mesures vers un serveur d'évaluation (7) à l'aide de l'application (3), afin d'évaluer les résultats des mesures pour déterminer la qualité du réseau de télécommunications (6) ;
**caractérisé en ce que** de nouvelles mesures sont réalisées par l'application (3) pendant le téléchargement montant des résultats des mesures et **en ce que** les résultats des nouvelles mesures sont ensuite téléchargés vers le serveur d'évaluation (7) par l'application (3).

7. Procédé selon la revendication 6, dans lequel un exemplaire comprimé des données qui sont diffusées en continu à partir du serveur de contenus (2) est produit et téléchargé vers le serveur d'évaluation (7) à l'aide de l'application (3).

8. Procédé selon la revendication 7, dans lequel de nouvelles mesures sont effectuées par l'application (3) pendant le téléchargement montant de l'exemplaire comprimé des données diffusées en continu, le cas échéant, et dans lequel les résultats des nouvelles mesures sont ensuite téléchargés vers le serveur d'évaluation (7) à l'aide de l'application (3).
